# EUROPÄISCHE PATENTSCHRIFT

(11) **EP 0 644 812 B1**
(45) Veröffentlichungstag und Bekanntmachung des Hinweises auf die Patenterteilung: **25.09.1996**
(21) Anmeldenummer: 93912852.6
(22) Anmeldetag: 02.06.1993
(51) Int. Cl.: B23K 1/00, B23K 1/20

(54) **VERFAHREN UND VORRICHTUNG ZUM BELOTEN EINES METALLISCHEN WABENKÖRPERS**
PROCESS AND DEVICE FOR SOLDERING A METALLIC HONEYCOMBED BODY
PROCEDE ET DISPOSITIF VISANT A SOUDER UN CORPS METALLIQUE EN NID D'ABEILLES

(30) Priorität: 11.06.1992 DE 4219145
(43) Veröffentlichungstag der Anmeldung: 29.03.1995
(73) Patentinhaber: Emitec Gesellschaft für Emissionstechnologie mbH, D-53797 Lohmar (DE)
(72) Erfinder: WIERES, Ludwig, D-5063 Overath (DE)
(74) Vertreter: Kahlhöfer, Hermann, Dipl.-Phys.
(86) Internationale Anmeldenummer: EP9301380
(87) Internationale Veröffentlichungsnummer: WO9325339

(56) Entgegenhaltungen:
- EP-A- 0 474 909

## Beschreibung

Die vorliegende Erfindung betrifft ein Verfahren zum Loten eines metallischen Wabenkörpers, der aus zumindest teilweise strukturierten Blechlagen gewickelt, geschichtet oder geschlungen ist, und zumindest in Teilbereichen verlötet werden soll, so wie eine Vorrichtung zur Durchführung des Verfahrens.

Metallische Wabenkörper werden z.B. in verstärktem Masse als Trägerkörper für katalytisch aktives Material in Abgasanlagen von Kraftfahrzeugen mit Verbrennungsmotor eingesetzt. Für die Haltbarkeit solcher Katalysator-Trägerkörper und auch für die Eigenschaft von ähnlichen Wabenkörpern in anderen Einsatzgebieten kommt es darauf an, daß die einzelnen Blechlagen, aus denen diese Körper bestehen, durch hochwertige Lötverbindungen, zumindest in Teilbereichen, miteinander verbunden sind. Überlicherweise bestehen solche Wabenkörper aus hochtemperatur-korrosionsfesten Stahlblechen und werden hochtemperaturvakuum- gelötet.

Solche gelöteten Wabenkörper werden beispielsweise in der DE-A-23 02 746 oder der DE-A-29 24 592 geschrieben. In diesen Schriften sind bereits Verfahren zum Beloten erwähnt, welche jedoch im allgemeinen zu große Lotmengen aufbringen, wodurch das Verfahren einerseits nicht wirtschaftlich ist und andererseits die Eigenschaften der Bleche durch Auflegieren mit dem Lot nachteilig beeinflußt werden.

In der EP-B-0 049 489 wird ein Verfahren zum Beleimen und Beloten solcher Wabenkörper beschrieben welches schon das Aufbringen geringer Mengen von Lot zuläßt. Auch in der DE-A-38 18 512 sind Verfahren zum Beleimen und Beloten von solchen Trägerkörpern beschrieben. Diese Schrift enthält auch eine Übersicht der bisher bekannten Belotungsverfahren.

Bisher angewendete Verfahren enthielten immer an irgendeiner Stelle einen problematischen Schritt, der zu Schwierigkeiten beim Herstellungsprozeß oder zu unwirtschaftlichen Ergebnissen führte. Bei einem Teil der Verfahren mußten die Bleche zunächst durch Beizen entfettet werden, was aufwendig ist und eine Entsorgung der entstehenden Reststoffe notwendig macht.

Ein solches Verfahren ist beispielsweise durch die EP-A-0 474 909 bekannt. Bei diesem Verfahren werden die Blechlagen vor der Belotung einer alkalischen Behandlung unterzogen. Durch die alkalische Behandlung soll das an den Blechlagen haftende Walzöl von diesen entfernt werden. Auch die Verwendung von Kleber oder Haftkleber führt im allgemeinen zum Einsatz organischer Lösungsmittel, was wiederum zusätzliche Maßnahmen zum Schutz der Umwelt erforderlich macht und daher unwirtschaftlich ist. Auch können im Vakuumofen verdampfende Stoffe Schwierigkeiten bei der Aufrechterhaltung des Vakuums hervorrufen.

Aufgabe der vorliegenden Erfindung ist es, einen besonders einfachen Belotungsprozeß zu schaffen, welcher ohne chemische Behandlung gewalzter Bleche und ohne organische Lösungsmittel auskommt und dabei gleichzeitig schnell abläuft, so daß er in der Massenproduktion eingesetzt werden kann. Auch die Schaffung einer entsprechenden Vorrichtung zur Durchführung des Verfahrens ist Aufgabe der vorliegenden Erfindung.

Diese Aufgabe wird gelöst durch ein Verfahren zum Beloten eines metallischen Wabenkörpers, der aus zumindest teilweise strukturierten Blechlagen gewickelt, geschichtet oder geschlungen ist und zumindest in Teilbereichen verlötet werden soll, mit folgenden Schritten:
a) Zumindest die strukturierten Blechlagen werden mit einer dünnen Schicht eines Walzöls versehen, sofern sie nicht schon vom Herstellungsprozeß vorhanden ist;
b) Die Walzölschicht wird thermisch behandelt zum Entfernen leichtflüchtiger Bestandteile;
c) Die Bereiche der Blechlagen, die mit Lot versehen werden sollen, werden mit einer wäßrigen Lösung eines Tensides in Kontakt gebracht;
d) Die aus den Blechlagen hergestellten Wabenkörper werden mit Lotpulver in Kontakt gebracht, welches an Stellen; wo Fett und Tensid gemeinsam vorhanden sind, haften bleibt.

Ein entscheidender Schritt bei der vorliegenden Erfindung liegt darin, daß eine im allgemeinen durch den Walzprozeß der Bleche schon vorhandene Ölschicht nicht erst mühsam vollständig entfernt werden muß, sondern zumindest teilweise, nach einer thermischen Behandlung, schon als Basis für den folgenden Prozeß des Aufbringens von Lot dienen kann. Sollte durch den Walzprozeß nicht genug oder nicht geeignetes Öl vorhanden sein, so kann zwar dieses Walzöl später, z.B. vor dem Strukturieren der Bleche aufgebracht werden, jedoch ist es natürlich am weitaus günstigsten, direkt beim Walzprozeß ein geeignetes Öl einzusetzen und davon eine dünne Schicht während des ganzen Prozesses auf den Blechen zu belassen. Bei einer thermischen Behandlung werden leichtflüchtige Bestandteile entfernt, andere umgewandelt, es bleiben jedoch Reste des Walzöls vorhanden. Werden diese in Kontakt mit einer sehr stark verdünnten wäßrigen Lösung eines Tensides gebracht, so bildet sich eine Schicht, die nach dem Entfernen des Wassers durch Trocknung eine optimale Voraussetzung für das Aufbringen von Lotpulver bildet. Diese Schicht zieht sich insbesondere in den Bereich kleiner Spalte in der Nähe der zu verlötenden Kontaktstellen zwischen den Blechlagen zurück und ist nicht so klebrig, daß an ihr überall Lotpulver hängen bleibt. Lediglich in dem Bereich der engen Spalte in der Nähe der zu verlötenden Stellen, kann Lotpulver haften bleiben. Wie anhand der Zeichnung näher erläutert wird, ist gerade dies die Voraussetzung für eine optimale Belotung. Hierdurch ist das Verfahren auch einem in der EP-B-0 136 514 beschriebenen Verfahren zum Trockenbeloten von Wabenkörpern überlegen. Die Ergebnisse sind besser reproduzierbar und mit geringerem apparativen Aufwand erreichbar.

Als geeignetes Öl hat sich ein handelsübliches Walzöl erwiesen, welches Mineralstoffe, Fettstoffe und Hilfsstoffe enthält. Zur Herstellung der wäßrigen Lösung eines Tensids kann insbesondere ein handelsübliches Konzentrat aus etwa 15 - 30 % nichtionischen Tensiden, Zitronensäure und Lösungsvermittler verwendet werden, wie z. B. in Spülmitteln enthalten ist. Dieses Konzentrat wird zu 85 - 97 %, vorzugsweise 92 - 95 %, mit Wasser verdünnt und kann dann bei einer Trägertemperatur von etwa 60 - 95°C, vorzugsweise von etwa 70 - 90°C mittels einer schwammartigen Vorrichtung, insbesondere mittels eines kurzflorigen Samtkissens, auf die Stirnseiten eines Wabenkörpers aufgetragen werden.

Die Vorbehandlung der Walzölschicht auf dem Wabenkörper erfolgt bei einer Temperatur von etwa 150 - 250°C, vorzugsweise etwa 200 - 230°C, wobei der Prozeß gerade so gesteuert werden kann, daß bei einer Resttemperatur des Wabenkörpers von etwa 70 - 90°C die Auftragung der wäßrigen Lösung eines Tensides erfolgt. Anschließend wird der Körper zur Trocknung wieder auf 100 - 160°C, vorzugsweise etwa 130 - 150°C aufgewärmt, wobei die Erwärmung jeweils bevorzugt im Luftstrom erfolgt. Metallische Wabenkörper haben eine große Oberfläche und gute Wärmeleitung, so daß kurze Aufheizzeiten möglich sind und die Erwärmung im Luftstrom problemlos ist.

Anschließend erfolgt die Belotung des Wabenkörpers, indem der Wabenkörper in eine Ansammlung von Lotpulver in einem Wirbelbett getaucht wird. Typischerweise werden Nickelbasislote verwendet, was jedoch für die vorliegende Erfindung nicht von entscheidender Bedeutung ist. Wichtig ist allerdings, daß die Korngröße bei 1 - 200 µm, vorzugsweise bei etwa 38 - 125 µm liegt, wobei Korngrößen in der unteren Hälfte dieses Bereiches häufiger vertreten sind als die in der oberen Hälfte. Kleine Korngrößen müssen deshalb stärker vorhanden sein, weil diese tief in die Spalte in der Nähe der zu verlötenden Bereiche eindringen können, was für die Qualität der Lötung von Wichtigkeit ist.

Um dieses Eindringen in die Spalte zu begünstigen, sollte der Wabenkörper im Wirbelbett noch bewegt, insbesondere hin- und herbewegt, hin- und hergedreht oder taumelnd bewegt werden. Wichtig ist, daß die Bewegung so erfolgt, daß die Körner in die vorhandenen Spalte neben den zu verlötenden Bereichen gedrückt werden.

Ein wirtschaftlich wichtiger Aspekt der Erfindung liegt darin, daß mit dem beschriebenen Belotungsverfahren weitaus weniger Lot für eine qualitative hochwertige Lötung benötigt wird, als bei herkömmlichen Verfahren. Zwar verarmt das Lotpulver mit der Zeit an kleineren Korngrößen, da diese in den Spalten hängen bleiben, jedoch kann das verbleibende grobkörnige Lotpulver nach einiger Zeit ausgetauscht und für andere Zwecke verwendet werden

Um zu verhindern, daß nach der Belotung bei folgenden Handhabungsschritten das nur leicht haftende Lotpulver wieder aus dem Wabenkörper herausfällt, ist es vorteilhaft, einen Haftstoff aufzusprühen, vorzugsweise Iso-Propanol (CH3 - CHOH - CH3).

Wie anhand der Zeichnung näher erläutert wird, enthält eine Vorrichtung zum Beloten eines mit solchen metallischen Wabenkörpers folgende Teile:
a) eine Heizstation (15) zur Durchströmung des Wabenkörpers mit heißer Luft, in welcher eine Ölschicht thermisch behandelt werden kann bei einer Temperatur von etwa 150 - 250°C, vorzugsweise 200 - 230°C;
b) eine Auftragsstation (16), welche das Auftragen einer wäßrigen Lösung eines Tensides mit einem saugfähigen Material (17) auf eine oder beide Stirnseiten des Wabenkörpers ermöglicht;
c) einer Trocknungsstation (18) zur nachfolgenden Trocknung im Luftstrom bei etwa 100 - 160°C, vorzugsweise 130 - 150°C;
d) eine Lotauftragsstation (12, 13, 14) mit einer Ansammlung von Lotpulver (14), welches von unten so mit einem Gas durchströmt wird, daß sich ein Wirbelbett bildet.

Zum besseren Verständnis werden, ohne daß die Erfindung hierauf beschränkt wäre, bestimmte Ausführungsbeispiele, Teile und Einzelheiten der Erfindung anhand der Zeichnung erläutert, und zwar zeigen
- Figur 1: einen teilweise fertig gewickelten Wabenkörper,
- Figur 2: einen Ausschnitt aus einem Querschnitt durch einen solchen Wabenkörper bei richtiger Belotung,
- Figur 3: einen entsprechenden Ausschnitt bei unzureichender Belotung,
- Figur 4: einen entsprechenden Ausschnitt bei falsch verteiltem Lot,
- Figur 5: einen schematischen Schnitt durch einen Behälter mit einem Wirbelbett für Lotpulver,
- Figur 6: ein Diagramm mit einer typischen Korngrößenverteilung des in der Vorrichtung nach Figur 5 zur Belotung von Wabenkörpern benutzten Lotpulvers, und
- Figur 7: eine schematische Darstellung einer Belotungsvorrichtung.

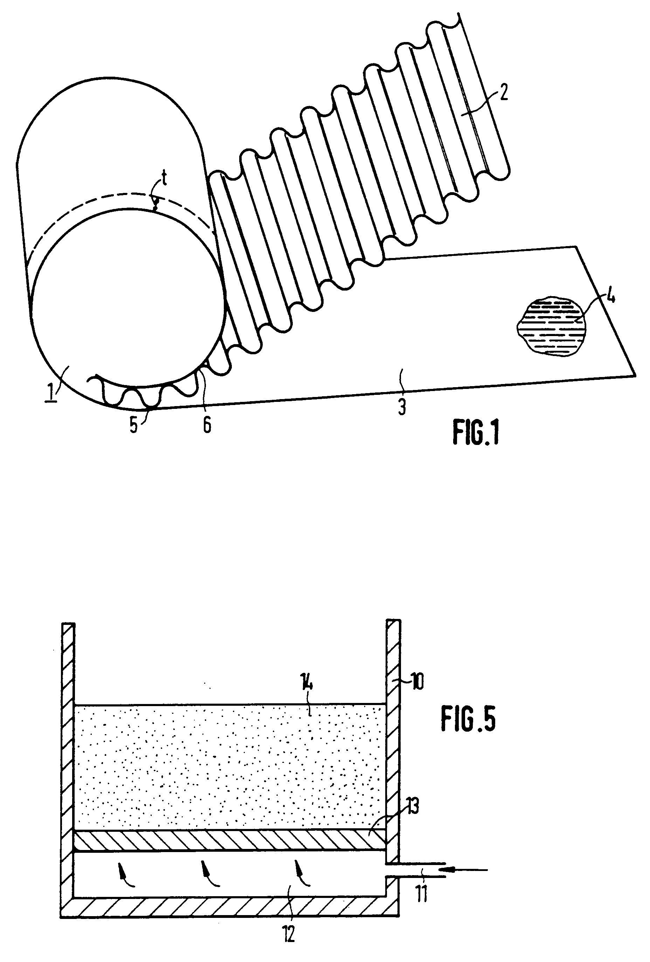

Figur 1 zeigt einen typischen Aufbau eines Wabenkörpers 1, wie er insbesondere als Abgaskatalysator-Trägerkörper eingesetzt wird. Ein gewelltes Blech 2 und ein glattes Blech 3 werden zu einem spiraligen Körper aufgewickelt, wobei typische Berührungsstellen 5, 6 zwischen den Blechlagen 2, 3 entstehen. Diese Berührungsstellen haben eine zwickelartige und keilartige Form. Die Oberfläche des gewellten Bleches 2 und/oder glatten Bleches 3 ist mit einer Schicht Walzöl 4 bedeckt. Der fertig gewickelte Wabenkörper 1 wird einer thermischen Behandlung unterzogen, bevor er bis zu einer Tiefe t stirnseitig mit einer wäßrigen Lösung eines Tensides kontaktiert wird. Der dargestellte Wabenkörper steht stellvertretend für jede Art von gewickelten, geschichteten oder anderweitig zusammengestellten Wabenkörper aus strukturierten Blechen, für die die vorliegende Erfindung gleichermaßen anwendbar ist, z.B. bei Wärmetauschen oder dergleichen.

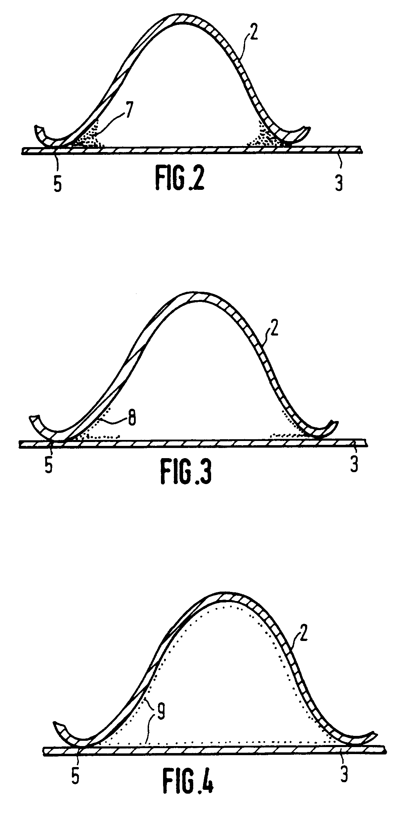

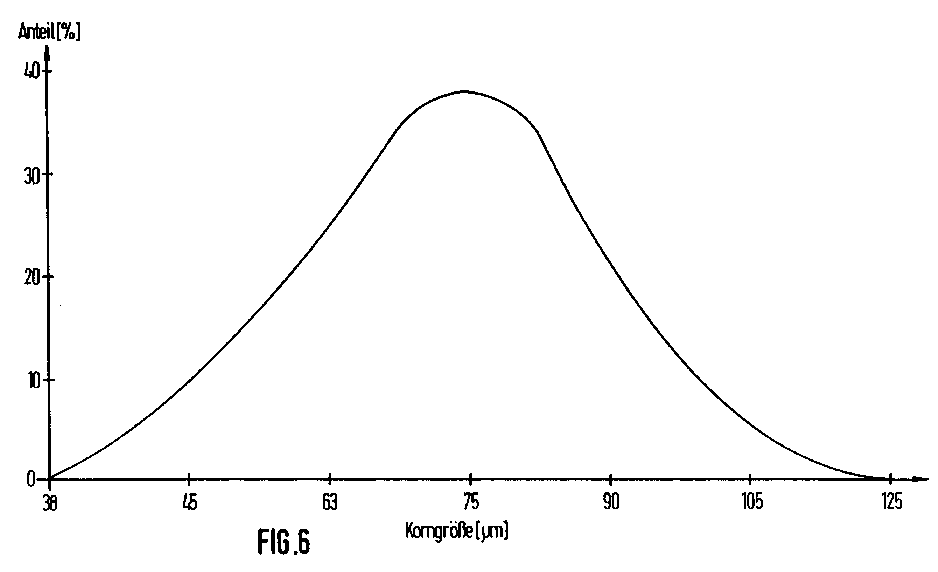

Die Figuren 2, 3 und 4 zeigen, worauf es bei dem erfindungsgemäßen Verfahren ankommt. Die in den drei Figuren schematisch dargestellten Ausschnitte aus einem Querschnitt durch einen solchen Wabenkörper zeigen die typischen Berührungsstellen zwischen einem gewellten Blech 2 und einem glatten Blech 3. Ähnliche Berührungsstellen treten auch bei etwas anders strukturierten Blechen auf, insbesondere auch dann, wenn der Wabenkörper aus unterschiedlich gewellten Blechlagen aufgebaut ist. Figur 2 zeigt eine richtige Lotansammlung 7 im Bereich der Berühungsstellen, während Figur 3 eine zu geringe Lotansammlung 8 und Figur 4 falsch verteiltes Lot 9 zeigt. Die erfindungsgemäße Kombination aus thermischer Behandlung von Walzöl und Kontaktierung mit der wäßrigen Lösung eines Tensides führt bei richtiger Trocknung gerade zu einer richtigen Lotansammlung 7, während andere Methoden zu einer zu geringen Lotansammlung 8 führen insbesondere aber zu einer falschen Lotverteilung 9, wie sie typischerweise aussieht, wenn die Stirnseiten bis zu einer bestimmten Tiefe t mit einem Kleber oder Binder versehen und dann belotet werden. Die Belotung nach Figur 4 verbraucht unnötig viel Lot, ohne die Qualität der Lötverbindungen entsprechend zu verbessern. Bei der vorliegenden Erfindung soll die Lotaufnahme bei stirnseitiger Belotung eines Wabenkörpers beispielsweise etwa 0,1 g pro cm² für einen Wabenkörper mit 15.50 Zellen/cm² (100 Zellen pro square inch (cpsi)) liegen, bei etwa 0,15 g/cm² bei 62.02 Zellen/cm² (400 cpsi) und bei etwa 0,2 g/cm² bei 93.02 Zellen/cm² (600 cpsi). Dies ist deutlich weniger, als mit den im Stand der Technik bekannten Belotungsmethode bei guter Lötqualität erreichbar ist.

Figur 5 zeigt einen Behälter 10, welcher in seinem unteren Bereich einen Einlaß 11 für getrocknete Luft oder ein trockenes Inertgas aufweist. Diese Luft wird von einem Gasraum 12 durch eine Sintermetallplatte 13 fein verteilt in eine Lotpulveransammlung 14 geblasen, welche dadurch ein Wirbelbett bildet, in welchem die Lotkörner quasi schweben und sich an einem Wabenkörper, welcher in das Wirbelbett getaucht wird, sehr leicht festsetzen können.

Figur 6 zeigt eine typische, geeignete Verteilung der Korngrößen eines solchen Lotpulvers, wobei bevorzugt für Abgaskatalysator-Trägerkörper Nickelbasislote eingesetzt werden. In dem Diagramm ist der Anteil (in %) gegen die Korngröße (in µm) aufgetragen. Der Maßstab der x-Achse ist nicht linear und die Kurve nicht symmetrisch, so daß insgesamt ein überwiegender Anteil an Korngrößen zwischen 38 und 75 µm vorhanden ist, was für eine richtige Lotansammlung gemäß Figur 2 wichtig ist.

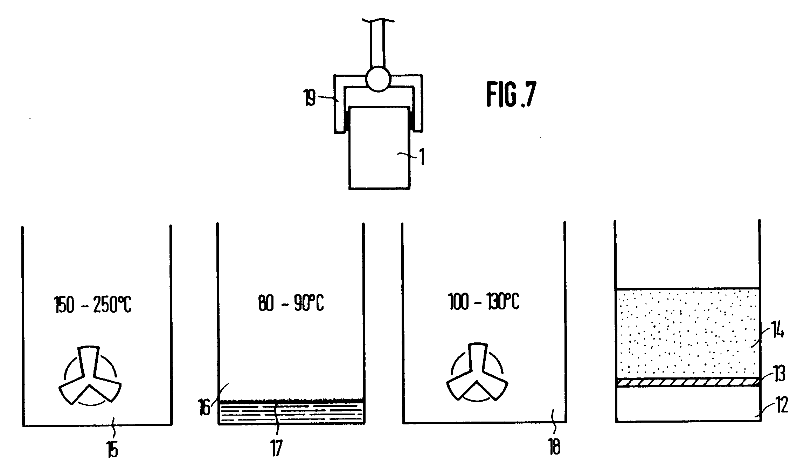

Figur 7 zeigt schematisch ein Ausführungsbeispiel einer erfindungsgemäßen Vorrichtung. Ein Manipulator 19 dient zum Transportieren eines Wabenkörpers 1 zu den einzelnen Stationen:
der Heizstation 15 zum thermischen Behandeln des Walzöls an der Oberfläche des Wabenkörpers 1,
der Auftragsstation 16, in welcher mit einem saugfähigen Material, vorzugsweise einem kurzflorigen Samtkissen 17, die wäßrige Lösung eines Tensides aufgetragen wird,
der Trocknungsstation 18, zum Trocknen des Auftrags und
der Lotauftragsstation mit einer von unten 12 mit Gas durchströmten Ansammlung von Lotpulver 14, welches über einer Sintermetallplatte 13 ein Wirbelbett bildet.

Die vorliegende Erfindung eignet sich für eine wirtschaftliche Belotung von metallischen Wabenkörpern in Großserien und führt zu einer sparsamen Lotverwendung bei gleichbleibend hoher Qualität der Lötung. Besonderes Anwendungsgebiet ist die Herstellung von Metallträgern für Abgaskatalysatoren in Kraftfahrzeugen.

## Patentansprüche

1. Verfahren zum Beloten eines metallischen Wabenkörpers (1), der aus zumindest teilweise strukturierten Blechlagen (2, 3) gewickelt, geschichtet oder geschlungen ist und zumindest in Teilbereichen (5, 6) verlötet werden soll, mit folgenden Schritten:
a) Zumindest die strukturierten Blechlagen (2) werden mit einer dünnen Schicht eines Walzöls (4) versehen, sofern diese nicht schon vom Herstellungsprozeß der Blechlagen (2) vorhanden ist;
b) Die Walzölschicht (4) wird thermisch behandelt zum Entfernen leichtflüchtiger Bestandteile;
c) Die Bereiche (5, 6) der Blechlagen (2, 3), die mit Lot versehen werden sollen, werden mit einer wäßrigen Lösung eines Tensides in Kontakt gebracht;
d) Die aus den Blechlagen hergestellten Wabenkörper (1) werden mit Lotpulver in Kontakt gebracht, welches an Stellen, wo Walzölreste und Tensid zusammengekommen sind, haften bleibt.

2. Verfahren nach Anspruch 1, dadurch gekennzeichnet, daß das Walzöl schon beim Walzen der Blechlagen (2, 3) aufgebracht wird.

3. Verfahren nach Anspruch 1 oder 2, dadurch gekennzeichnet, daß das Walzöl zusammengesetzt ist aus Mineralölen, Fettstoffen und Hilfsstoffen.

4. Verfahren nach Anspruch 1, 2 oder 3, dadurch gekennzeichnet, daß ein Konzentrat, enthaltend etwa 15 - 30 % nichtionische Tenside, Zitronensäure und Lösungsvermittler, mit etwa 85 - 97 %, vorzugsweise 92 - 95%, Wasser verdünnt wird und anschließend mit den zu belotenden Bereichen (5, 6) in Kontakt gebracht wird.

5. Verfahren nach einem der vorhergehenden Ansprüche, dadurch gekennzeichnet, daß die wäßrige Lösung des Tensides mittels eines kurzflorigen Samtkissens aufgebracht wird, in dem dieses Kissen mit der wäßrigen Lösungen getränkt und gegen die Stirnseiten des Wabenkörpers (1) gedrückt wird.

6. Verfahren nach einem der vorhergehenden Ansprüche, dadurch gekennzeichnet, daß die thermische Behandlung des Walzöls bei einer Temperatur von etwa 150 bis 250°C erfolgt, vorzugsweise bei etwa 200 - 230°C.

7. Verfahren nach einem der vorhergehenden Ansprüche, dadurch gekennzeichnet, daß die Kontaktierung des Wabenkörpers mit der wäßrigen Lösung eines Tensides bei einer Temperatur des Wabenkörpers von etwa 60 - 95°C, vorzugsweise etwa 70 - 90°C, erfolgt.

8. Verfahren nach einem der vorhergehenden Ansprüche, dadurch gekennzeichnet, daß der Wabenkörper nach der Kontaktierung mit der wäßrigen Lösung eines Tensides bei etwa 100 - 160°C, vorzugsweise etwa 130 - 150°C getrocknet wird.

9. Verfahren nach einem der vorhergehenden Ansprüche, dadurch gekennzeichnet, daß die thermische Behandlung der Walzölschicht, und/oder die Trocknung nach Kontaktierung mit der wäßrigen Lösung eines Tensides mittels Durchströmung mit heißer Luft erfolgt.

10. Verfahren nach einem der vorhergehenden Ansprüche, dadurch gekennzeichnet, daß der Wabenkörper stirnseitig in ein Wirbelbett (12, 13, 14) aus Lötpulver (14) getaucht wird, so daß die Bereiche (5, 6), in denen die Reste des Walzöles (4) und die wäßrige Lösung eines Tensides miteinander kontaktiert worden sind, mit dem Lötpulver (14) in Kontakt kommen.

11. Verfahren nach Anspruch 10, dadurch gekennzeichnet, daß das Wirbelbett (12, 13, 14) aus einer Ansammlung von feinkörnigem Lotpulver (14) besteht, welche von unten mittels eines trockenen Gases, vorzugsweise eines Inertgases aufgewirbelt wird.

12. Verfahren nach Anspruch 11, dadurch gekennzeichnet, daß das feinkörnige Lötpulver (14) Korngrößen zwischen 1 und 200 µm aufweist, vorzugsweise Korngrößen zwischen 38 und 125 µm, wobei Korngrößen in der unteren Hälfte dieses Bereiches häufiger vorkommen als solche in der oberen Hälfte.

13. Verfahren nach Anspruch 10, 11 oder 12, dadurch gekennzeichnet, daß der Wabenkörper (1) während seines Aufenthaltes im Wirbelbett (12, 13, 14) hin- und herbewegt wird, so daß Lotpulver (7) in Spalte nahe den zu verlötenden Stellen (5) gedrückt wird.

14. Verfahren nach einem der vorhergehenden Ansprüche, dadurch gekennzeichnet, daß zur Sicherung des aufgebrachten Lotpulvers gegen Herausfallen bei weiteren Bearbeitungsvorgängen ein Film aus einem Haftstoff, vorzugsweise Iso-Propanol aufgesprüht wird

15. Verfahren nach einem der vorhergehenden Ansprüche, dadurch gekennzeichnet, daß bei stirnseitiger Belotung eines Wabenkörpers nur etwa folgende Lotmengen aufgebracht werden:
etwa 0,1 g pro cm² bei einem Wabenkörper mit 15.50 Zellen/cm² (100 cpsi),
etwa 0,15 g pro cm² bei einem Wabenkörper mit 62.02 Zellen/cm² (400 cpsi),
etwa 0,2 g pro cm² bei einem Wabenkörper mit 93.02 Zellen/cm² (600 cpsi).

16. Vorrichtung zum Beloten eines metallischen Wabenkörpers (1), der aus zumindest teilweise strukturierten Blechlagen (2, 3) gewickelt, geschichtet oder geschlungen ist, und zumindest in Teilbereichen (5, 6) verlötet werden soll, enthaltend folgende Teile:
a) eine Heizstation zur thermische Behandlung, insbesondere Durchströmung des Wabenkörpers mit heißer Luft bei einer Temperatur von etwa 150 - 250°C, vorzugsweise 200 - 230°C;
b) eine Auftragsstation zum Auftragen einer wäßrigen Lösung eines Tensides mit einem saugfähigen Material auf eine oder beide Stirnseiten des Wabenkörpers;
c) eine Trocknungsstation zur nachfolgenden Trocknung im Luftstrom bei etwa 100 - 160°C, vorzugsweise 130 - 150°C;
d) eine Lotauftragsstation mit einer Ansammlung von Lotpulver (14), welches so von unten mit einem Gas (11, 12) durchströmt wird, daß sich ein Wirbelbett bildet.

17. Vorrichtung nach Anspruch 16, dadurch gekennzeichnet, daß die Auftragsstation ein mit der wäßrigen Lösung eines Tensides tränkbares kurzfloriges Samtkissen aufweist.

18. Vorrichtung nach Anspruch 16, dadurch gekennzeichnet, daß die Belotungsstation einen mit Lotpulver (14) befüllbaren Behälter (10) aufweist, dessen Zwischenboden von eine Sintermetallplatte (13) gebildet wird und von Druckluft oder einem Inertgas von unten (12) durchströmt werden kann.

## Claims

1. A process for brazing a metallic honeycomb body (1) which is coiled, layered or wound from at least partially structure sheet metal layers (2, 3) and which is to be brazed at least in partial regions (5, 6), comprising the following steps:
a) at least the structure sheet metal layers (2) are provided with a thin coating of a rolling oil (4) if this is not already present from the process for production of the sheet metal layers (2);
b) the rolling oil coating (4) is subjected to a heat treatment to remove easily volatile constituents;
c) the regions (5, 6) of the sheet metal layers (2, 3) which are to be provided with brazing material are brought into contact with an aqueous solution of a tenside; and
d) the honeycomb bodies (1) produced from the sheet metal layers are brought into contact with brazing powder which remains adhering to locations where rolling oil residues and tenside have come together.

2. A process according to claim 1 characterised in that the rolling oil is already applied in the operation of rolling the sheet metal layers (2, 3).

3. A process according to claim 1 or claim 2 characterised in that the rolling oil is composed of mineral oils, greases and additives.

4. A process according to claim 1, claim 2 or claim 3 characterised in that a concentrate containing about 15 to 30% of non-ionic tensides, citric acid and dissolution aid is diluted with about 85 to 97%, preferably 92 to 95% water, and then brought into contact with the regions (5, 6) to be brazed.

5. A process according to one of the preceding claims characterised in that the aqueous solution of the tenside is applied by means of a short-pile velvet pad by the pad being saturated with the aqueous solutions and pressed against the ends of the honeycomb body (1).

6. A process according to one of the preceding claims characterised in that the heat treatment of the rolling oil is effected at a temperature of about 150 to 250°C, preferably at about 200 to 230°C.

7. A process according to one of the preceding claims characterised in that contacting of the honeycomb body with the aqueous solution of a tenside is effected at a temperature of the honeycomb body of about 60 to 95°C, preferably about 70 to 90°C.

8. A process according to one of the preceding claims characterised in that the honeycomb body is dried after contacting with the aqueous solution of a tenside at about 100 to 160°C, preferably about 130 to 150°C.

9. A process according to one of the preceding claims characterised in that the heat treatment of the coating of rolling oil and/or drying after contacting with the aqueous solution of a tenside is effected by means of a through flow using hot air.

10. A process according to one of the preceding claims characterised in that the honeycomb body is dipped at its end into a fluidised bed (12, 13, 14) of brazing material powder (14) so that the regions (5, 6) in which the remains of the rolling oil (4) and the aqueous solution of a tenside have been contacted with each other come into contact with the brazing material powder (14).

11. A process according to claim 10 characterised in that the fluidised bed (12, 13, 14) comprises an accumulation of fine-grain brazing material powder (14) which is fluidised from below by means of a dry gas, preferably an inert gas.

12. A process according to claim 11 characterised in that the fine-grain brazing material powder (14) has grain sizes of between 1 and 200 µm, preferably grain sizes of between 38 and 125 µm, wherein grain sizes in the lower half of that range occur more frequently than those in the upper half.

13. A process according to claim 10, claim 11 or claim 12 characterised in that the honeycomb body (11) is moved to and fro while it remains in the fluidised bed (12, 13, 14) so that brazing material powder (7) is urged into gaps near the locations (5) to be brazed.

14. A process according to one of the preceding claims characterised in that to secure the applied brazing material powder to prevent it from falling out in further processing operations a film of an adhesive, preferably isopropanol, is sprayed on.

15. A process according to one of the preceding claims characterised in that when brazing a honeycomb body at the ends only approximately the following amounts of brazing material are applied:
about 0.1 g per cm² with a honeycomb body with 15.50 cells/cm² (100 cpsi),
about 0.15 g per cm² with a honeycomb body with 62.02 cells/cm² (400 cpsi), and
about 0.2 g per cm² with a honeycomb body with 93.02 cells/cm² (600 cpsi).

16. Apparatus for brazing a metallic honeycomb body (1) which is coiled, layered or wound from at least partially structured sheet metal layers (2, 3) and which is to be brazed at least in partial regions (5, 6), including the following parts:
a) a heating station for the heat treatment of the honeycomb body, in particular with a flow of hot air therethrough, at a temperature of about 150 to 250°C, preferably 200 to 230°C;
b) an application station for applying an aqueous solution of a tenside with an absorbent material to one or more ends of the honeycomb body;
c) a drying station for subsequent drying in an air flow at about 100 to 160°C, preferably 130 to 150°C; and
d) a brazing material-application station with an accumulation of brazing material powder (14) through which a gas (11, 12) flows from below in such a way that a fluidised bed is formed.

17. Apparatus according to claim 16 characterised in that the application station has a short-pile velvet pad which can be saturated with the aqueous solution of a tenside.

18. Apparatus according to claim 16 characterised in that the brazing station has a container (10) which can be filled with brazing material powder (14) and whose intermediate false bottom is formed by a sintered metal plate (13) and can have compressed air or an inert gas flowing therethrough from below (12).

## Revendications

1. Procédé de brasage d'un corps alvéolaire métallique (1) constitué de couches de tôles (2, 3) au moins partiellement structurées, qui sont enroulées, empilées ou entrelacées, et qui doit être brasé au moins dans des zones partielles (5, 6), comportant les phases suivantes :
a) au moins les couches de tôles structurées (2) sont pourvues d'une mince couche d'huile de laminage (4), sauf si celle-ci est déjà présente de par le processus de fabrication des couches de tôles (2) ;
b) la couche d'huile de laminage (4) subit un traitement thermique destiné à retirer des composants légers volatils ;
c) les zones (5, 6) des couches de tôles (2, 3), qui doivent être pourvues d'agent de brasage, sont mises en contact avec une solution aqueuse d'un agent tensioactif ;
d) les corps alvéolaires (1) fabriqués avec les couches de tôles sont mis en contact avec de la poudre de brasage, qui adhère aux emplacements où des restes d'huile de laminage se sont mélangés à l'agent tensioactif.

2. Procédé selon la revendication 1, caractérisé en ce que l'huile de laminage est déjà appliquée lors du laminage des couches de tôles (2, 3).

3. Procédé selon la revendication 1 ou 2, caractérisé en ce que l'huile de laminage est composée d'huiles minérales, de matières solides et d'agents auxiliaires.

4. Procédé selon les revendications 1, 2 ou 3, caractérisé en ce qu'un concentré, contenant environ 15 à 30 % d'agents tensioactifs non ioniques, de l'acide citrique et des solvants, est dilué avec environ 85 à 97 % d'eau, de préférence 92 à 95 %, et est ensuite mis en contact avec les zones (5, 6) à braser.

5. Procédé selon l'une quelconque des revendications précédentes, caractérisé en ce que la solution aqueuse de l'agent tensioactif est appliquée au moyen d'un coussin en velours à poils ras, ce coussin étant à cet effet imprégné de la solution aqueuse et pressé contre les faces frontales du corps alvéolaire (1).

6. Procédé selon l'une quelconque des revendications précédentes, caractérisé en ce que le traitement thermique de l'huile de laminage est effectué à une température de l'ordre de 150 à 250 °C, de préférence de l'ordre de 200 à 230 °C.

7. Procédé selon l'une quelconque des revendications précédentes, caractérisé en ce que la mise en contact du corps alvéolaire avec la solution aqueuse d'un agent tensioactif est effectuée à une température du corps alvéolaire de l'ordre de 60 à 95 °C, de préférence de l'ordre de 70 à 90 °C.

8. Procédé selon l'une quelconque des revendications précédentes, caractérisé en ce que, après la mise en contact avec la solution aqueuse d'un agent tensioactif, le corps alvéolaire est séché à une température de l'ordre de 100 à 160 °C, de préférence de l'ordre de 130 à 150 °C.

9. Procédé selon l'une quelconque des revendications précédentes, caractérisé en ce que le traitement thermique de la couche d'huile de laminage et/ou le séchage après la mise en contact avec la solution aqueuse d'un agent tensioactif est effectué au moyen d'une circulation d'air chaud.

10. Procédé selon l'une quelconque des revendications précédentes, caractérisé en ce que le corps alvéolaire est plongé du côté de la face frontale dans un lit fluidisé (12, 13, 14) en poudre de brasage (14) de sorte que les zones (5, 6), dans lesquelles les restes de l'huile de laminage (4) sont entrés en contact avec la solution aqueuse d'un agent tensioactif, entrent en contact avec la poudre de brasage (14).

11. Procédé selon la revendication 10, caractérisé en ce que le lit fluidisé (12, 13, 14) est constitué d'une accumulation de poudre de brasage (14) finement granulée, qui est fluidisée à partir du bas au moyen d'un gaz sec, de préférence un gaz inerte.

12. Procédé selon la revendication 11, caractérisé en ce que la granulométrie de la poudre de brasage (14) finement granulée est comprise entre 1 et 200 µm, de préférence entre 38 et 125 µm, la moitié inférieure de cette plage de granulométrie étant plus fréquemment présente que la moitié supérieure.

13. Procédé selon les revendications 10, 11 ou 12, caractérisé en ce que le corps alvéolaire (1) est déplacé en va-et-vient pendant son séjour dans le lit fluidisé (12, 13, 14), de sorte que de la poudre de brasage (7) est pressée dans des fentes situées à proximité des emplacements (5) à braser.

14. Procédé selon l'une quelconque des revendications précédentes, caractérisé en ce qu'un film d'urée, de préférence d'isopropanol, est appliqué par pulvérisation pour assurer que la poudre de brasage déposée ne puisse pas tomber au cours d'autres processus de traitement.

15. Procédé selon l'une quelconque des revendications précédentes, caractérisé en ce que pour le brasage en face frontale d'un corps alvéolaire, il n'est déposé que les quantités approximatives suivantes d'agent de brasage :
environ 0,1 g par cm² pour un corps alvéolaire à 15,50 cellules/cm² (100 cpsi),
environ 0,15 g par cm² pour un corps alvéolaire à 62,02 cellules/cm² (400 cpsi),
environ 0,2 g par cm² pour un corps alvéolaire à 93,02 cellules/cm² (600 cpsi).

16. Dispositif destiné au brasage d'un corps alvéolaire métallique (1) constitué de couches de tôles (2, 3) au moins partiellement structurées, qui sont enroulées, empilées ou entrelacées, et qui doit être brasé au moins dans des zones partielles (5, 6), comportant les parties suivantes :
a) une station de chauffage destinée au traitement thermique, notamment à la circulation dans le corps alvéolaire d'air chaud ayant une température de l'ordre de 150 à 250 °C, de préférence de 200 à 230 °C ;
b) une station d'application destinée à appliquer une solution aqueuse d'un agent tensioactif sur l'une ou sur les deux faces frontales du corps alvéolaire à l'aide d'un matériau à pouvoir absorbant ;
c) une station de séchage destinée au séchage postérieur dans un courant d'air de l'ordre de 100 à 160 °C, de préférence de 130 à 150 °C ;
d) une station d'application d'agent de brasage avec une accumulation de poudre de brasage (14), qui est traversée à partir du bas par un gaz (11, 12) de telle sorte qu'un lit fluidisé se forme.

17. Dispositif selon la revendication 16, caractérisé en ce que la station d'application comporte un coussin en velours à poils ras pouvant être imprégné par la solution aqueuse d'un agent tensioactif.

18. Dispositif selon la revendication 16, caractérisé en ce que la station de brasage comporte un réservoir (10) pouvant être rempli de poudre de brasage (14), dont le fond intermédiaire est constitué d'une plaque (13) en métal fritté, et qui peut être traverse à partir du bas (12) par de l'air comprimé ou par un gaz inerte.
